# EUROPÄISCHE PATENTSCHRIFT

(11) **EP 0 600 444 B1**
(45) Veröffentlichungstag und Bekanntmachung des Hinweises auf die Patenterteilung: **17.06.1998**
(21) Anmeldenummer: 93119287.6
(22) Anmeldetag: 30.11.1993
(51) Int. Cl.: G02B 5/00, H04N 1/028

(54) **Objektivblende**
Diaphragm for objective
Diaphragme pour objectif

(30) Priorität: 03.12.1992 DE 4240734
(43) Veröffentlichungstag der Anmeldung: 08.06.1994
(73) Patentinhaber: CGK Computer Gesellschaft Konstanz mbH, D-78467 Konstanz (DE)
(72) Erfinder: Schnitzlein, Markus, D-78315 Radolfzell (DE)
(74) Vertreter: Fuchs, Franz-Josef, Dr.-Ing.

(56) Entgegenhaltungen:
- EP-A- 0 411 800
- GB-A- 2 164 470
- JP-A- 4 098 217
- XEROX DISCLOSURE JOURNAL, Bd. 8, Nr. 2, März 1983, Stamford CT, US, Seite 159; R.M. BARAN : 'Shaped aperture for raster scanner'

## Beschreibung

Die Erfindung betrifft eine Objektivblende innerhalb eines Objektivs zur zeilenweisen Abbildung einer zeilenweise abzutastenden Bildvorlage auf eine optische CCD-Sensorzeile.

Maschinelle optische Zeichenerkennungssysteme zum Lesen von Bildvorlagen, z.B. Belegen, Formularen und dergleichen, lassen sich grundsätzlich in zwei Teilsysteme gliedern, von denen das erste die Bildvorlage meßtechnisch erfaßt und vorbereitet, während das zweite die Aufgabe der eigentlichen Erkennung innehat. Das zur Erfassung vorgesehene System weist in der Regel eine optoelektrische Abtastvorrichtung (Scanner) auf, die in einen optischen Teil und einen Verarbeitungsteil aufgeteilt werden kann.

Der optische Teil verfügt dabei über abbildungsoptische Komponenten, mit denen eine abzutastende Bildvorlage jeweils auf einen Zeilen- oder Flächensensor zur Bildgewinnung abgebildet wird. Bekannte Zeilensensoren sind z.B. CCD-Sensoren.(Charge Coupled Devices), die in verschiedenen Längen und Pixelgrößen verwendet werden können.

In der Abbildungsoptik wird dem Sensor über ein Objektiv eine von einem Beleuchtungssystem erzeugte Lichtmenge zugeführt. Diese Lichtmenge wird u.a. vom Öffnungsverhältnis des Objektivs bestimmt, das durch dessen Öffnungsdurchmesser und Brennweite definiert ist. Um Bildfehler bei optischen Abbildungen zu begrenzen und Streulicht innerhalb der Abtastvorrichtung zu vermeiden, ist das Objektiv mit einer Blende versehen. Dabei beschränkt die Blende aber auch die auf den Sensor fallende Lichtmenge.

An die Abbildungsoptik werden viele Anforderungen gestellt, die sich nicht gleichzeitig erfüllen lassen. Ein Beispiel hierfür ist der Wunsch nach einer möglichst großen Blendenöffnung zur Erzielung einer hohen Lichtintensität auf dem Sensor und damit einer hohen Abtastgeschwindigkeit, die dem Erfordernis nach einer kleinen Blendenöffnung zum Erreichen einer großen Schärfentiefe und somit einer guten Abtastqualitat gegenübersteht.

Aus der Druckschrift Xerox Disclosure Journal, Vol. 8, Nr. 2, Seite 159 ist eine Vorrichtung mit einem Objektiv, einer CCD-Sensorzeile und einer Objektivblende bekannt, die zur Erzielung einer omogeneren Beleuchtung auf die CCD-Sensorzeile, eine längliche Blendenöffnung aufweist.

Aus der Druckschrift GB-A-2 164 470 ist eine weitere Objektivblende mit einer länglichen Blendenöffnung für eine stereoskopische Vorrichtung bekannt.

Aus der japanischen Druckschrift JP-A-4 098 217 ist die Funktion einer länglichen Blende als Tiefpaßfilter, jedoch außerhalb des Objektivs, nämlich im Bildraum, bekannt. Die Art und Gestalt des Sensors wird vom Autor nicht näher beschrieben. Es wird zwar der Begriff CCD verwendet, jedoch ist nicht bei kannt, ob es sich hierbei um eine CCD-Sensorzeile oder eine CCD-Sensormatrix handelt. Informationen über die relative Lage der Blendenöffnung zum Sensor können daher dem Dokument nicht entnommen werden.

Es ist Aufgabe der vorliegenden Erfindung, eine Objetkivblende der eingangs genannten Art in der Weise auszugestalten, daß ihre abbildungsoptischen Eigenschaften im Hinblick auf eine Abtastgeschwindigkeit und Abtastqualitat optimiert sind.

Diese Aufgabe wird durch die Merkmale des Anspruchs 1 gelöst.

Die gemäß der Erfindung ausgebildete Blende weist somit im Vergleich zu bekannten Blenden eine vergrößerte Blendenöffnung auf, die lediglich in einer durch die Anordnung des CCD-Sensors festgelegten Vorzugsrichtung hinsichtlich der optischen Qualitätsvorgaben aufrechterhalten werden kann, während sie in der zum Sensor senkrecht verlaufenden Richtung bezüglich der optischen Quantitätsvorgaben einen Freiheitsgrad aufweist. Mit der ausgedehnten Blendenöffnung kann unter Aufrechterhaltung der optischen Qualitätsanforderungen eine höhere Abtastgeschwindigkeit bei der zeilenweisen Abtastung erzielt werden.

Gemäß einer Weiterbildung der Erfindung ist die Blendenöffnung symmetrisch ausgedehnt. Dies hat den Vorteil einer gleichmäßigen Ausleuchtung der Meßebene.

Die Blendenöffnung weist gemäß einer Weiterbildung der Erfindung vorzugsweise eine bikonvexe Form auf, so daß sich eine im Vergleich zur bekannten pupillenartigen Blendenöffnungsform erweiterte augenförmige Blendenöffnung ergibt, mit der Lichtintensitätsgewinne in der Meßebene erreichbar sind. Eine andere bevorzugte Form der Blendenöffnung besteht aus einem Rechteck.

Die Erfindung wird anhand eines in einer Zeichnung dargestellten Ausführungsbeispiels näher erläutert.Im einzelnen zeigen
Figur 1 eine Objektivblende bekannter Art,sowie
Figur 2 eine Objektivblende gemäß der Erfindung.

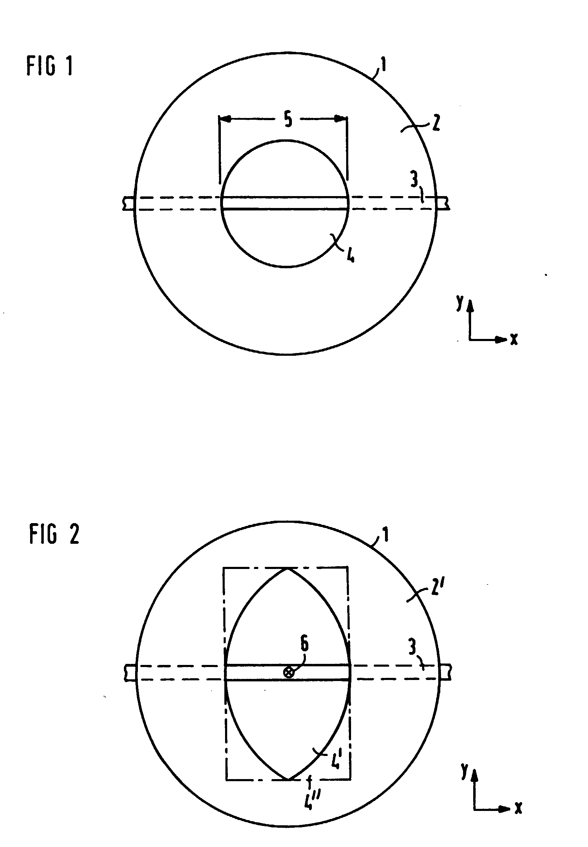

Figur 1 zeigt ein Objektiv 1 mit einer zugehörigen Blende 2, die die Abbildungsoptik im optischen Teil einer Abtastvorrichtung bilden.Durch diese Optik wird eine Bildvorlage in Form eines Belegs, eines Formulars oder ähnlichem auf einen optischen CCD-Sensor 3 (Charge Coupled Devices) abgebildet, wobei die von einem in der Abtastvorrichtung vorgesehenen Beleuchtungssystem erzeugte und auf die Sensorebene auftreffende Lichtmenge ein Maß für die Abtastqualitat und die Abtastgeschwindigkeit darstellt.

Im Objektiv 1 wird die Blende 2 zur Verbesserung der Abtastqualitat eingesetzt, wodurch jedoch die auf den CCD-Sensor 3 einfallende Lichtintensität beschränkt wird.Mit Hilfe des CCD-Sensors 3 erfolgt eine zeilenweise Abtastung der Bildvorlage, die in einer festgelegten, beispielsweise mit der y-Richtung eines x,y-Koordinatensystems übereinstimmenden Abtastrichtung unter der Optik vorbeitransportiert wird.Die bekannte Objektivblende gemäß Figur 1 weist bei einer vorgegebenen Qualitätsvorgabe bezüglich der optischen Eigenschaften am Ort des CCD-Sensors 3 eine beispielsweise kreisförmige Blendenöffnung 4 auf, für die ein aus Öffnungsdurchmesser 5 und effektiver Brennweite des Objektivs 1 ableitbares Öffnungsverhältnis angebbar ist. Eine Optimierung der bei der zeilenweisen Abtastung an die Abbildungsoptik gestellten, gegensätzlichen Anforderungen nach einer großen Blendenöffnung und einer großen Schärfentiefe bewirkt eine Objektivblende 2' gemäß der Figur 2.Diese Blende 2' weist eine Blendenöffnung 4'auf, die im Vergleich zur Blendenöffnung gemäß Figur 1 den abbildungsoptischen Qualitätsvorgaben für die Abtastung in der x-Richtung genügt, und die durch eine Ausdehnung in der orthogonal zum CCD-Sensor 3 verlaufenden Abtastrichtung y die abbildungsoptischen Eigenschaften der Objektivblende hinsichtlich der auf die Meßebene einfallenden gesamten Lichtmenge verbessert.

Die Blendenöffnung 4' kann auch in der durch den für die zeilenweise Abtastung vorgesehenen CCD-Sensor festgelegten Vorzugsrichtung x je nach den gewünschten Qualitäts- bzw. Quantitätsvorgaben verändert werden.Die beiden Dimensionen der Blendenöffnung 4' sind nicht völlig unabhängig voneinander zu modifizeren, jedoch nimmt deren Abhängigkeit mit zunehmenden Abstand zu einer durch das Objektiv 1 verlaufenden optischen Achse 6 ab.

Die Blendenöffnung 4' ist vorzugsweise zu beiden Seiten der optischen Achse 6 entlang der senkrecht zum CCD-Sensor 3 verlaufenden Richtung symmetrisch ausgedehnt, um eine gleichmäßige Beleuchtung der Meßebene zu erzielen.Eine gegenüber der in Figur 1 dargestellten kreisförmigen Blendenöffnung symmetrisch erweiterte Blendenöffnung 4' weist eine bikonvexe, einem Auge ähnelnde Öffnungsform auf, mit der sich im Vergleich zur bekannten, pupillenartigen Gestalt der Blendenöffnung Lichtintensitätsgewinne erreichen lassen. Eine andere Blendenöffnung 4'' weist eine rechteckige Form auf, die beispielsweise bis zu einer Spaltblende veränderbar ist.

Die Blendenöffnung gemäß Figur 1 hat ein Öffnungsverhältnis von beispielsweise 1/5.6, während die Blendenöffnung 4' gemäß Figur 2 z.B in x-Richtung einen Wert von 1/6.0 und in der orthogonalen Richtung y einen Wert von 1/2.8 annimmt.

### Bezugszeichenliste

- 1: Objektiv
- 2: Blende
- 2': Objektivblende
- 3: CCD-Sensor
- 4: Blendenöffnung
- 4': Blendenöffnung
- 4'': Blendenöffnung
- 5: Öffnungsdurchmesser
- 6: Achse

## Patentansprüche

1. Vorrichtung zur optischen zeilenweisen Abbildung einer zeilenweise abzutastenden Bildvorlage, mit einem Objektiv, einer optischen CCD-Sensorzeile (3) und einer im Objektiv eingesetzten Blende (2'), **dadurch gekennzeichnet,** daß die Blende (2') eine Blendenöffnung (4' ; 4"), mit einer in orthogonaler Richtung zur CCD-Sensorzeile (3) größeren Ausdehnung als in einer dazu parallelen Richtung aufweist.

2. Blende nach Anspruch 1,
**dadurch gekennzeichnet,** daß die Blendenöffnung (4') symmetrisch ausgedehnt ist.

3. Blende nach Anspruch 1 oder 2,
**dadurch gekennzeichnet,** daß die Blendenöffnung (4') eine bikonvexe Form aufweist.

4. Blende nach Anspruch 1 oder 2,
**dadurch gekennzeichnet,** daß die Blendenöffnung (4") eine rechteckige Form aufweist.

## Claims

1. Device for the optical linewise imaging of an original picture to be scanned in a linewise fashion, having a lens, an optical CCD sensor row (3) and a diaphragm (2') inserted in the lens, characterized in that the diaphragm (2') has a diaphragm opening (4' ; 4") with an extent which is larger in an orthogonal direction relative to the CCD sensor row (3) than in a direction parallel thereto.

2. Diaphragm according to Claim 1, characterized in that the diaphragm opening (4') is symmetrically expanded.

3. Diaphragm according to Claim 1 or 2, characterized in that the diaphragm opening (4') has a biconvex shape.

4. Diaphragm according to Claim 1 or 2, characterized in that the diaphragm opening (4") has a rectangular shape.

## Revendications

1. Dispositif pour la reproduction optique ligne par ligne d'un original devant être balayé ligne par ligne, comportant un objectif, une ligne de capteurs optiques CCD (3) et un diaphragme (2'), inséré dans l'objectif, caractérisé en ce que le diaphragme (2') a une ouverture de diaphragme (4' ; 4") qui s'étend plus dans la direction orthogonale à la ligne de capteurs CCD (3) que dans une direction qui lui est parallèle.

2. Diaphragme selon la revendication 1, caractérisé en ce que l'ouverture de diaphragme (4') est symétrique.

3. Diaphragme selon la revendication 1 ou 2, caractérisé en ce que l'ouverture de diaphragme (4') a une forme biconvexe.

4. Diaphragme selon la revendication 1 ou 2, caractérisé en ce que l'ouverture de diaphragme (4") a une forme rectangulaire.
